# EUROPÄISCHE PATENTANMELDUNG

(11) **EP 1 760 381 A1**
(43) Veröffentlichungstag der Anmeldung: **07.03.2007**
(21) Anmeldenummer: 06003615.9
(22) Anmeldetag: 22.02.2006
(51) Int. Cl.: F16L 15/04, F16L 41/10, F16B 43/00, F16J 15/06

(54) **Stutzenverschraubung sowie Stutzen und Axialdichtung für eine solche Stutzenverschraubung und Verwendung einer Stutzenverschraubung**

(30) Priorität: 06.09.2005 DE 102005042401
(71) Anmelder: SIEMENS AKTIENGESELLSCHAFT, 80333 München (DE)
(72) Erfinder: Wiegelmann, Rudolf, 45476 Mülheim an der Ruhr (DE)

(57) **Zusammenfassung**

Mit der Erfindung wird eine Stutzenverschraubung (108) zum druckdichten Verbinden zweier ein Fluid führender Bauteile angegeben, bei welcher die Lage der Axialdichtung (20, 120) derart vorbestimmt ist, dass ein die Axialdichtung (20, 120) deformierendes Einklemmen zwischen der Oberfläche (42) eines ersten Bauteils (14) und dem Stutzen (10) zuverlässig vermieden wird. Erfindungsgemäß wird die Axialdichtung (20, 120) von innen geführt. Hierzu schlägt die Erfindung zwei Ausgestaltungen vor, bei denen jeweils zumindest kurz vor Herstellung der druckdichten Verbindung das bisher zu groß dimensionierte Spiel zwischen Gewindefreistich (24, 124) und Innendurchmesser (D) der Axialdichtung (20, 120) reduziert wird. Entweder ist eine am Stutzen (110) im Bereich des Gewindefreistichs (124) angeordnete Rampe (127) und eine daran benachbarte Schulter (129) vorgesehen, oder der Innendurchmesser (D_{I}) der Axialdichtung (120) wird, verglichen mit einem aus dem Stand der Technik, aufgrund eines daran angeordneten Innengewindes (121) geringfügig reduziert.

## Beschreibung

Die Erfindung betrifft eine Stutzenverschraubung zum druckdichten Verbinden zweier ein Fluid führender Bauteile, umfassend eine an einem ersten Bauteil vorgesehene Öffnung und einen als zweites Bauteil in die Öffnung einschraubbaren Stutzen, die mit ineinander passenden Gewinden versehen sind und zwei, am ersten Bauteil und am Stutzen angeordnete, sich einander gegenüberliegende Dichtflächen zum Einschluss einer ringförmigen Axialdichtung, wobei die am Stutzen angeordnete Dichtfläche als zum Außengewinde benachbarter Anschlag ausgebildet ist, an welchem gewindeseitig ein Gewindefreistich vorgesehen ist. Ferner betrifft die Erfindung einen Stutzen für eine druckdichte Stutzenverschraubung umfassend ein Außengewinde zum Einschrauben des Stutzens in einem erstem Bauteil und einen zum Außengewinde benachbarten Anschlag als Dichtfläche für eine Axialdichtung, wobei zwischen dem Anschlag und dem Außengewinde ein Gewindefreistich vorgesehen ist. Die Erfindung betrifft auch eine ringförmige Axialdichtung für eine druckdichte Stutzenverschraubung zwischen einem ersten Bauteil und einem Stutzen. Darüber hinaus betrifft die Erfindung die Verwendung einer Stutzenverschraubung.

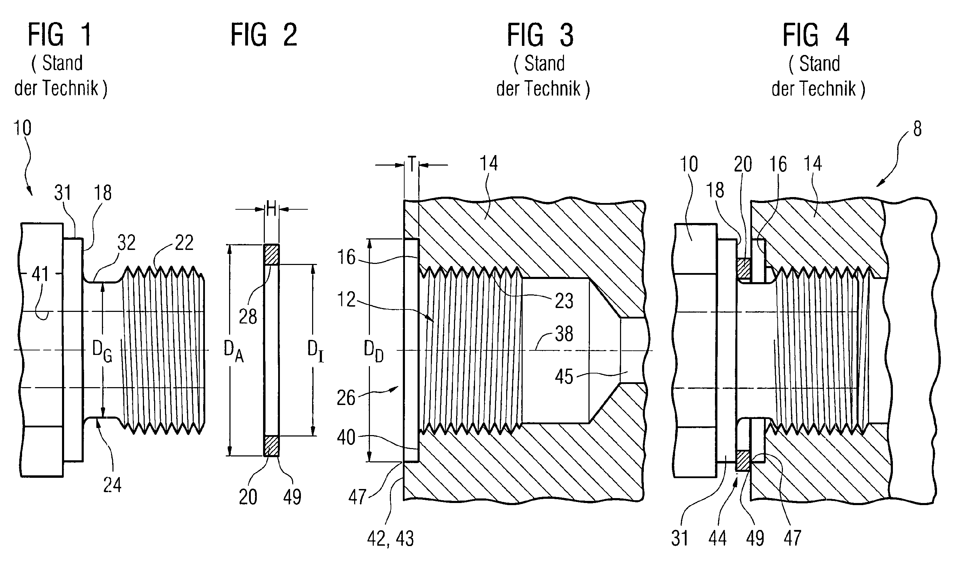

Eine Stutzenverschraubung, bestehend aus einem ersten Bauteil und einem darin als zweites Bauteil einschraubbaren Stutzen, ist aus der DIN 3852-2 bekannt und in den FIG 1 bis FIG 4 gezeigt. Der auch als Einschraubzapfen bezeichnete Stutzen 10 kann in das mit einem Einschraubloch 12 versehene erste Bauteil 14 eingeschraubt werden. Im eingeschraubten Zustand liegen sich zwei jeweils ringförmige Dichtflächen 16, 18 gegenüber, von denen eine Dichtfläche 16 am ersten Bauteil 14 und die andere Dichtfläche 18 an einem Anschlag 31 des Stutzens 10 vorgesehen ist. Zwischen den Dichtflächen 16, 18 ist eine ringförmige Axialdichtung 20 (FIG 2) vorgesehen, mittels der eine druckdichte Stutzenverbindung 8 hergestellt werden kann. Zwischen der am Stutzen 10 angeordneten Dichtfläche 18 und dem daran angeordneten Außengewinde 22 ist ein herstellungsbedingter Gewindefreistich 24 vorgesehen.

Die metallische Axialdichtung 20 ist als Ring mit einem rechteckigen Querschnitt ausgebildet und weist in ihren geometrischen Ausmaßen eine Dicke H sowie einen Innendurchmesser D_{I} und einen Außendurchmesser D_{A} auf.

Im Einschraubloch ist ein Innengewinde 23 vorgesehen. Die um das Einschraubloch 12 bzw. um dessen Öffnung 26 am ersten Bauteil 14 vorgesehene ringförmig umlaufende Dichtfläche 16 ist Teil einer ringförmigen Anspiegelungsfläche 40. Die Anspiegelungsfläche 40 ist in Bezug auf eine an ihr außen angrenzende Oberfläche 42 des Bauteils 14 zurückversetzt und somit von einem umlaufenden Vorsprung 43 begrenzt. Die den Durchmesser D_{D} aufweisende Anspiegelungsfläche 40 und der umlaufende Vorsprung 43 begrenzen einen Anspiegelungsfreiraum. Der Durchmesser D_{D} der Anspiegelungsfläche 40 ist nach DIN geringfügig größer als der Außendurchmesser D_{A} der Axialdichtung 20, da diese von dem ringförmigen Vorsprung 43 geführt und in der Betriebslage positioniert wird.

Vor dem Zusammenschrauben der Stutzenverbindung 8 wird dem Außengewinde 22 des Stutzens 10 die Axialdichtung 20 übergestülpt, bis diese im Bereich des Gewindefreistichs 24 frei beweglich liegt. Anschließend wird der Stutzen 10 in die Öffnung 26 bzw. in das Einschraubloch 12 des Bauteils 14 eingeführt und mit dieser verschraubt, bis die Axialdichtung 20 beidseitig an beiden Dichtflächen 16, 18 druckdicht vorgespannt anliegt. Nach dem Herstellen der Verbindung kann ein durch eine im Zentrum des Stutzens 10 angeordnete Bohrung 41 geführtes Fluid einem im Grund des Einschraublochs 12 mündenden Kanal 45 leckagefrei zugeführt werden.

Es hat sich jedoch als nachteilig herausgestellt, dass, wenn die Orientierung der Stutzenverschraubung im Raum eine Verschraubungsrichtung hat, die parallel zur Horizontalebene ist, die Axialdichtung 20 mit dem vertikal gesehen höchsten Punkt 28 ihres Innendurchmessers D_{I} an der höchsten Stelle 32 des Gewindefreistichs 24 anliegt. Dies führt dazu, dass der vertikal gesehen niedrigste Punkt 49 des Außendurchmessers D_{A} der Axialdichtung 20 dann vertikal gesehen unterhalb des niedrigsten Punktes 47 der Anspiegelungsfläche 40, d.h. im Bereich der Oberfläche 42, liegt. Da die an dem ersten Bauteil 14 angeordnete Dichtfläche 16 als ringförmige Anspiegelungsfläche 40 um das Einschraubloch 12 von der Oberfläche 42 des Bauteils 14 zurückgesetzt ist, kann die hängende Axialdichtung 20 während des Einschraubvorganges zwischen der Dichtfläche 18 des Stutzen 10 und der Oberfläche 42 in unteren Bereich 44 (FIG 4) eingeklemmt werden. Je nach tatsächlicher Ausführung der Axialdichtung 20 und deren Einbaulage kann sie dadurch plastisch deformiert und/oder ovalisiert werden, wodurch sich je nach Grad der Ovalisierung lokal kritische Vorspannungsverluste ergeben, die ebenfalls die Dichtigkeit der Verbindung gefährden. Auch kann es sein, dass aufgrund der Ovalisierung die Axialdichtung bzw. der Dichtring nicht mehr vollständig umlaufend an einer der beiden Dichtflächen 16, 18 anliegt, was zum Verlust der Dichtigkeit führt.

Aufgabe der Erfindung ist daher die Bereitstellung einer gattungsgemäßen Stutzenverschraubung, bei der unabhängig von der Einbaulage der Bauteile stets eine definierte Betriebslage der Axialdichtung zum druckdichten Verbinden der Bauteile erreicht wird. Weitere Aufgabe hierzu ist es, einen Stutzen und eine ringförmige Axialdichtung sowie eine Verwendung einer Stutzenverschraubung anzugeben.

Die auf die Stutzenverschraubung gerichtete Aufgabe wird erfindungsgemäß gelöst, indem ein Mittel im Bereich des Innendurchmessers der Axialdichtung vorgesehen ist, das die Axialdichtung im Bereich des Gewindefreistichs in eine Betriebslage zentrisch positioniert. Die Erfindung geht von der Erkenntnis aus, dass durch eine im Bereich des Innendurchmessers der Axialdichtung vorgesehene Führung während des Einschraubvorgangs, insbesondere unmittelbar vor dem Einklemmen der Axialdichtung zwischen den sich einander gegenüberliegenden Dichtflächen, ein Verkeilen der Axialdichtung zwischen der am Stutzen vorgesehenen Dichtfläche und einem die Anspiegelungsfläche begrenzenden Vorsprung sicher vermieden werden kann. Durch die innerhalb des Innendurchmessers der Axialdichtung vorgesehenen Mittel zum Positionieren bzw. Führen der Axialdichtung wird, sofern die Verschraubungsrichtung parallel zur Horizontalebene liegt, der vertikal gesehen niedrigste Punkt des Außendurchmessers der Axialdichtung mindestens so weit angehoben, dass dieser stets innerhalb des Durchmessers der Anspiegelungsfläche liegt. Ein Einklemmen der Axialdichtung, wie beim Stand der Technik, wird zuverlässig vermieden, unabhängig von der Orientierung der Stutzenverschraubung im Raum. Somit kann mit der Erfindung eine besonders zuverlässige und stets druckdichte Stutzenverbindung angegeben werden.

Vorteilhafte Ausgestaltungen der Erfindung sind in den Unteransprüchen angegeben.

Das Mittel zur Positionierung der Axialdichtung in der Betriebslage kann in einer ersten Ausgestaltung der Erfindung eine am Stutzen, im Bereich des Gewindefreistichs anschlagseitig vorgesehene koaxiale Schulter sowie eine Rampe umfasst, die von dem geringeren Durchmesser des Gewindefreistichs ausgehend zu dem Durchmesser der Schulter ansteigt. Während des Einschraubvorgangs einer im Wesentlichen horizontal angeordneten Stutzenverbindung liegt der vertikal gesehen höchste Punkt des Innendurchmessers der Axialdichtung am höchsten Punkt des geringeren Durchmessers des Gewindefreistichs an. Mit fortschreitendem Einschraubvorgang wird der Abstand zwischen den beiden sich gegenüberliegenden Dichtflächen verringert, bis die Axialdichtung die an dem Bauteil vorgesehene Dichtfläche berührt. Durch das weitere Eindrehen des Stutzens wird die noch bewegliche Axialdichtung in Richtung der Rampe verschoben und anschließend durch die Verschiebung entlang der Rampe, deren höchste Kante dabei gegenüber der Horizontalrichtung geneigt nach oben verläuft, stetig angehoben, so dass der niedrigste Punkt des Außendurchmessers der Axialdichtung währenddessen in den vom umlaufenden Vorsprung begrenzten Anspiegelungsraum hinein gehoben wird. Das Einklemmen der Axialdichtung zwischen der am Stutzen angeordneten Dichtfläche und dem die Anspiegelungsfläche begrenzenden Vorsprung kann somit unabhängig von der Orientierung der Verschraubung im Raum zuverlässig vermieden werden. Durch das fortgesetzte Eindrehen des Stutzens verschiebt sich die Axialdichtung von der Rampe auf die Schulter, wodurch die Axialdichtung nahezu konzentrisch zu den Gewinden positioniert d.h. zentriert wird. Folglich wird die Axialdichtung nicht mehr, wie bisher, von außen, d.h. vom umlaufenden Vorsprung geführt, sondern von innen. Der Innendurchmesser der Axialdichtung ist in Verbindung mit der am Stutzen vorgesehenen Rampe und Schulter ausschlaggebend für deren Positionierung in einer Betriebslage in der Verschraubung.

In einer vorteilhaften Weiterbildung der ersten Ausgestaltung weist die am Stutzen angeordnete Schulter eine sich in Axialrichtung erstreckende Breite auf, die etwa der halben Dicke der Axialdichtung entspricht. Damit wird sichergestellt, dass eine genügend große Auflagefläche für die Axialdichtung vorhanden ist, welche die Axialdichtung führen kann. Außerdem wird dadurch unmittelbar vor dem Verspannen der Axialdichtung diese in der optimalen Betriebslage positioniert, d. h. zentriert.

In einer weiteren besonders vorteilhaften Weiterbildung entspricht der Durchmesser der am Stutzen angeordneten Schulter annähernd dem Innendurchmesser der ringförmigen Axialdichtung, wobei ein kleines, aber ausreichendes Spiel zwischen Axialdichtung und Schulter verbleibt, um die Axialdichtung in der optimalen Betriebslage zu positionieren. Je kleiner dieses Spiel ist, umso besser ist die Betriebslage der Axialdichtung.

Eine zweite Ausgestaltung der Erfindung schlägt vor, dass das Mittel zur Positionierung der Axialdichtung in der Betriebslage ein am Innendurchmesser der Axialdichtung angeordnetes Gewinde umfasst, welches mit dem Stutzen verschraubbar ist. Hierdurch wird eine Reduzierung des Innendurchmessers der Axialdichtung, verglichen mit einer Axialdichtung nach dem Stand der Technik, erreicht, was ebenso das Spiel zwischen dem Gewindefreistich eines aus dem Stand der Technik bekannten Stutzens und der Axialdichtung verringert. Dies führt auch zu einer Führung der Axialdichtung von innen. Durch die Verringerung des Innendurchmessers der Axialdichtung ist während des Einschraubvorganges eines nach dem Stand der Technik ausgebildetem Stutzens der vertikal gesehen niedrigste Punkt des Außendurchmessers der Axialdichtung geringfügig angehoben, verglichen mit einer bereits bekannten Axialdichtung. Für die beschriebene Orientierung der Stutzenverschraubung im Raum liegt stets der niedrigste Punkt des Außendurchmesser der Axialdichtung innerhalb des Anspiegelungsraums, wodurch ein ungewolltes Einklemmen der Axialdichtung zwischen dem die Anspiegelungsfläche begrenzenden Vorsprung und der am Stutzen angeordneten Dichtfläche vermieden wird. Außerdem kann eine bestehende Stutzenverbindung besonders einfach und kostengünstig mit einer derartigen Axialdichtung nachgerüstet werden. Ferner kann sich die über das Außengewinde aufgeschraubte und im Bereich des Gewindefreistichs lose Axialsicherung nicht ohne weiteres ungewollt vom Stutzen lösen.

Gemäß einer vorteilhaften Weiterbildung ist die an dem Stutzen ringförmig umlaufende Dichtfläche in Axialrichtung ballig gekrümmt. Hierdurch wird eine Abdichtung ermöglicht, bei der eine von der gekrümmten Dichtfläche gebildete Dichtkante an der Axialdichtung anliegt.

Um eine visuelle Kontrolle der Lage der Axialdichtung in der Verschraubung zu ermöglichen, ist die an dem Bauteil angeordnete ringförmige Dichtfläche Teil einer ringförmigen Anspiegelungsfläche, die gegenüber der diese umgebenden Bauteiloberfläche zurückspringt und bei der die ringförmige Anspiegelungsfläche einen Durchmesser aufweist, der mindestens um den Faktor 1,05 größer ist als der Außendurchmesser der ringförmigen Axialdichtung. Eine Führung der Axialdichtung von außen durch den Vorsprung, wie beim Stand der Technik, ist nicht mehr erforderlich.

Ebenso kann es zweckmäßig sein, dass die an dem ersten Bauteil angeordnete ringförmige Dichtfläche Teil einer ringförmigen Anspiegelungsfläche ist, die gegenüber der diese umgebenden Bauteiloberfläche zurückspringt und bei der die ringförmige Anspiegelungsfläche eine Tiefe gegenüber der Bauteiloberfläche aufweist, die geringer ist als die Dicke der Axialdichtung. Auch hierdurch ist es möglich, im verschraubten Zustand eine visuelle Kontrolle der Axialdichtung durchzuführen, um deren optimalen Sitz in der Verschraubung zu kontrollieren.

Die auf den Stutzen gerichtete Aufgabe wird durch die Merkmale des Anspruchs 9 und die auf die Axialdichtung gerichtete Aufgabe wird durch die Merkmale des Anspruchs 11 gelöst. Dabei sind die mit dem erfindungsgemäßen Stutzen und der erfindungsgemäßen Axialdichtung erzielbaren Vorteile analog der Vorteile der Stutzenverschraubung.

Die auf die Verwendung einer Stutzenverschraubung gerichtete Aufgabe wird durch die Merkmale des Anspruchs 12 gelöst. Es ist dabei von besonderem Vorteil, wenn die Stutzenverschraubung mit einem Stutzen nach einem der Ansprüche 9 oder 10 oder mit einer ringförmigen Axialdichtung nach Anspruch 11 zum Anschluss einer den Stutzen aufweisenden Brennstoffleitung an einem Brenner einer stationären Gasturbine verwendet wird.

Vorteilhaft ist es, wenn ein durch den hohlen Stutzen brennbares Medium leckagenfreie in das Bauteil und weiter in den Brenner der Gasturbine einströmen kann. Ein sicherer und zuverlässiger Betrieb der Gasturbine ist möglich, ohne dass an einer bisher möglichen Leckagestelle eine Feuergefahr entsteht. Selbstverständlich können die von der Erfindung eingesetzten Komponenten und die Stutzenverschraubung in anderen Gebieten mit gleichen oder ähnlichen Anforderungen eingesetzt werden.

Die Erfindung wird anhand einer Zeichnung mit mehreren Ausführungsbeispielen erläutert. Es zeigen:
- FIG 1: einen Stutzen im Querschnitt gemäß dem Stand der Technik,
- FIG 2: eine Axialdichtung gemäß dem Stand der Technik,
- FIG 3: im Querschnitt ein erstes Bauteil mit einem den Stutzen aufnehmenden Einschraubloch gemäß dem Stand der Technik,
- FIG 4: eine Stutzenverschraubung mit einem ersten Bauteil, einem Stutzen und einer dazwischen angeordneten Axialdichtung nach dem Stand der Technik,
- FIG 5: in perspektivischer Ansicht einen erfindungsgemäßen Stutzen mit zwischen dem Außengewinde und einer Dichtfläche angeordneten Rampe und Schulter,
- FIG 6 - 10: die schrittweise Darstellung des Einschraubvorgangs eines erfindungsgemäßen Stutzens in einem ersten Bauteil zum Herstellen einer Stutzenverschraubung und
- FIG 11: eine mit dem Außengewinde des Stutzens verschraubbare Axialdichtung.

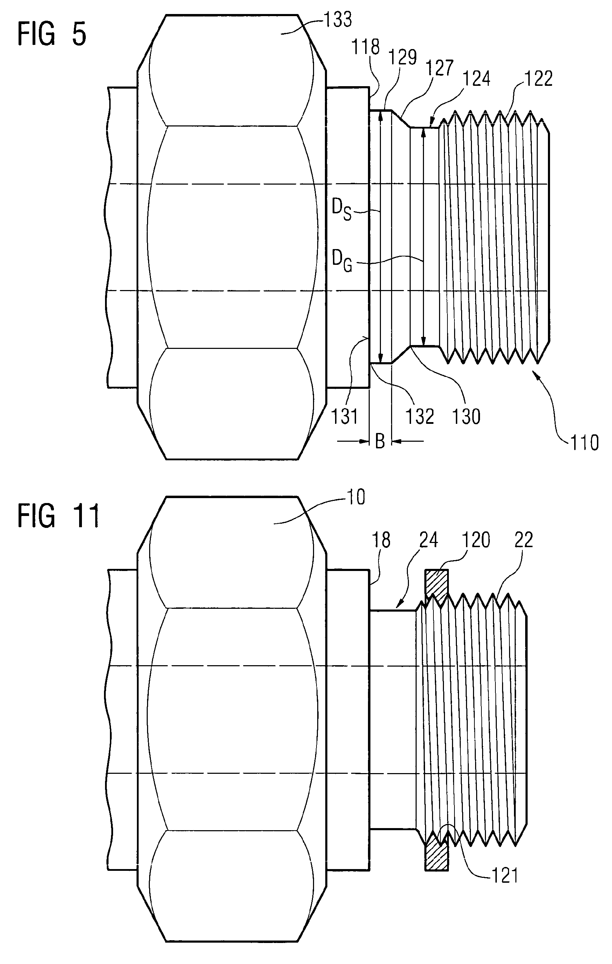

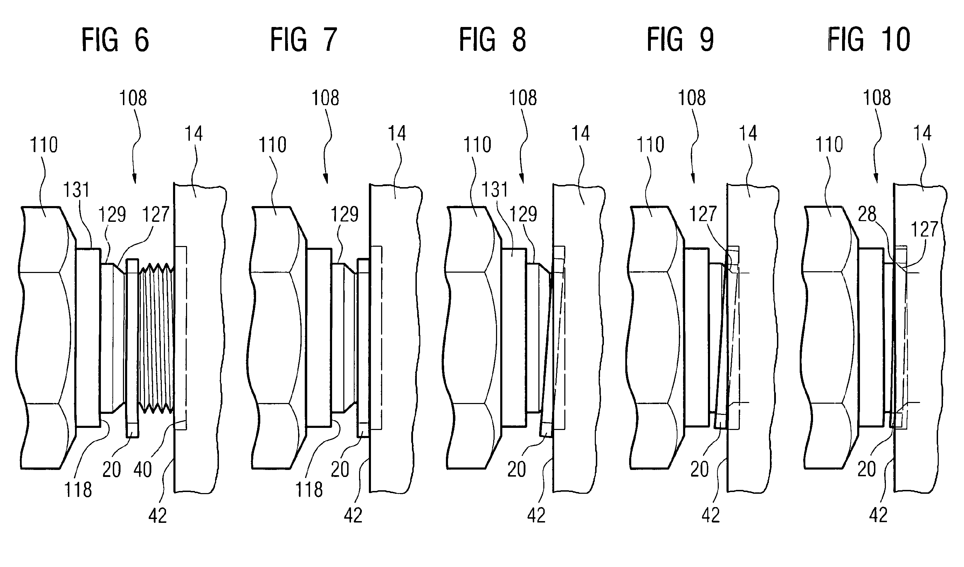

FIG 5 zeigt einen erfindungsgemäßen Stutzen 110 für eine Stutzenverschraubung 108 (FIG 6 - FIG 10) zum druckdichten Verbinden zweier ein Fluid führender Bauteile. Der im Zentrum mit einer Bohrung versehene Stutzen 110 weist an einem Ende ein Außengewinde 122 auf, dem ein Gewindefreistich 124 und ein Anschlag 131 folgen. Innerhalb des Gewindefreistichs 124, also zwischen dem Anschlag 131 und dem Außengewinde 122 ist außerdem eine Rampe 127 und eine Schulter 129 vorgesehen, wobei die Rampe 127 mit ihrem der Schulter 129 abgewandtem Ende 130 am geringeren Durchmesser des Gewindefreistichs 124 angrenzt. Von dort aus weitet sich die beispielsweise konische Rampe 127 auf den Durchmesser D_{S} der Schulter 129 auf, welche zylindrisch ausgebildet ist. Die Schulter 129 liegt mit ihrem der Rampe 127 abgewandtem Ende 132 am Anschlag 131 an. An dem Anschlag 131 schließt sich beispielsweise ein Außensechskant 133 zum Verschrauben des Stutzens 110 in einem ersten Bauteil 14 an. Der Gewindefreistich 124 ist herstellungsbedingt und weist einen geringsten Durchmesser D_{G} auf, der geringer als der Durchmesser von Außengewinde 122, Rampe 127 und Schulter 129 ist. Der axiale Abschnitt des Gewindefreistichs 124 mit minimalem Durchmesser D_{G} des erfindungsgemäßen Stutzens 110 ist gegenüber dem Gewindefreistich 24 des dem aus Stand der Technik bekannten Stutzens 10 verkürzt. Der Durchmesser D_{S} der Schulter 129 entspricht annähernd dem Innendurchmesser D_{I} einer dafür vorgesehenen, aus dem Stand der Technik bekannten Axialdichtung 20. Die konische Rampe 127 verbindet in Axialrichtung, also in Einschraubrichtung betrachtet, die zylindrische Schulter 129 mit dem geringsten Durchmesser D_{G} des Gewindefreistichs 124.

Stirnseitig am Anschlag 131 ist die am Stutzen 110 angeordnete Dichtfläche 118 vorgesehen, an welcher die Axialdichtung 20 umlaufend zur Herstellung einer druckdichten Verbindung anliegen kann. Die Schulter 129 weist in Axialrichtung eine Breite B auf, die im Wesentlichen halb so groß ist wie die Dicke H der Axialdichtung 20.

FIG 6 bis FIG 10 zeigen die schrittweise Darstellung des Einschraubvorgangs des erfindungsgemäßen Stutzens 110 in dem ersten Bauteil 14 zum Herstellen der Stutzenverschraubung 108, wobei die Orientierung der Verschraubung so gewählt ist, dass diese die von innen stattfindende Führung der Axialdichtung 20 am Besten darstellt.

Der geringfügig in das erste Bauteil 14 eingeschraubte Stutzen 110 zeigt im Bereich seines Gewindefreistiches 124 die als metallischen Dichtring ausgebildete Axialdichtung 20. Das Bauteil 14 weist eine nach vorgenannter DIN ausgeführte Anspiegelungsfläche 40 auf, an welcher der Dichtring zum Anliegen kommen soll. Aus FIG 6 geht hervor, dass die Verschraubungsrichtung parallel zur Horizontalebene ist und daher die Axialdichtung 20 mit ihrem horizontal gesehen höchsten Punkt des Innendurchmessers D_{I} am höchsten Punkt des geringsten Durchmessers D_{G} des Gewindefreistichs 124 anliegt. Der niedrigste Punkt 47 der hängenden Axialdichtung 20 liegt geringfügig unterhalb des niedrigsten Punktes der Anspiegelungsfläche 40.

Durch das Eindrehen des Stutzens 110 in das Bauteil 14 wird die Axialdichtung 20 zumindest mit ihrer horizontal gesehen oberen Hälfte in den Anspiegelungsfreiraum hineinbewegt. FIG 8 zeigt, dass die Axialdichtung 20 im oberen Bereich an der am ersten Bauteil 14 vorgesehen Dichtfläche 16 und im unteren Bereich an der Oberfläche 42 anliegt, wodurch die Axialdichtung 20 gegenüber der Vertikalrichtung leicht verkippt ist. Aufgrund der fortgesetzten Einschraubbewegung wird die Axialdichtung 20 entlang der im Durchmesser größer werdenden Rampe 127 verschoben und dadurch so angehoben, so dass der niedrigste Punkt 47 des Außendurchmessers D_{A} der Axialdichtung 20 in den Anspiegelungsfreiraum hinein gehoben wird. Der weitere Einschraubvorgang ist in FIG 9 dargestellt. In FIG 10 ist gezeigt, dass die noch bewegliche Axialdichtung 20 bereits auf der Schulter 129 des Stutzens 110 liegt und somit bereits vor dem Verspannen zwischen den beiden Dichtflächen 118 und 16 ihre koaxial gesehen bestmögliche, zentrierte Betriebslage eingenommen hat. Das weitere Einschrauben des Stutzens 110 verspannt dann die Axialdichtung 20 zwischen den beiden stirnseitig einander gegenüberliegenden, jeweils ringförmig umlaufenden Dichtflachen 16, 118, so dass eine zuverlässige und druckdichte Verbindung hergestellt ist. Eine plastische Ovalisierung der starren, beispielsweise metallischen Axialdichtung 20 kann somit sicher vermieden werden.

Die Lage der Axialdichtung 20 wird demnach während des Einschraubvorgangs durch den Innendurchmesser D_{I} in Verbindung mit der am Stutzen 110 angeordneten Rampe 127 und Schulter 129 vorgegeben, so dass die Axialdichtung 20 währenddessen von innen geführt und in die Betriebslage positioniert wird.

Eine alternative Ausgestaltung, bei der das ungewollte Einklemmen der Axialdichtung 20 zwischen der Dichtfläche 18 und der die Anspiegelungsfläche 40 begrenzenden Oberfläche 42 ebenso zuverlässig vermieden wird, ist in FIG 11 gezeigt. Der Innendurchmesser D_{I} der Axialdichtung 20 ist gegenüber einer aus dem Stand der Technik bekannten Axialdichtung 20 reduziert und mit einem Innengewinde 121 versehen, so dass die Axialdichtung 20 über das Außengewinde 22 des aus dem Stand der Technik bekannten Stutzens 10 aufgeschraubt werden muss, um zum Gewindefreistich 24 gebracht zu werden. Durch die Verringerung des Innendurchmessers D_{I} wird die bei der beschriebenen Orientierung im Raum hängende Axialdichtung 20 geringfügig, jedoch soweit wie nötig angehoben (verglichen mit dem Stand der Technik), dass der niedrigste Punkt der Axialdichtung 20 nicht mehr zwischen der Dichtfläche 18 und der die Anspiegelungsfläche 40 begrenzenden Oberfläche 42 des ersten Bauteils 14 eingeklemmt werden kann.

Da die Axialdichtung 20, 120 von innen geführt und somit deren Betriebslage durch Mittel vorbestimmt ist, die im Bereich des Innendurchmessers der Axialdichtung liegen, kann der Durchmesser D_{D} der Anspiegelungsfläche 40 mindestens um den Faktor 1,05 größer gewählt werden als der Außendurchmesser D_{A} der Axialdichtung 20, 120. Der Durchmesser D_{D} war für die bisher notwendige äußere Führung annährend so groß wie der Außendurchmesser D_{A} der Axialdichtung 20.

Optional kann außerdem die Tiefe T der Anspiegelungsfläche 40, bezogen auf die Oberfläche 42, geringer sein als die Dicke H der Axialdichtung 20, 120, was ebenso eine visuelle Kontrolle der Axialdichtung 120, 20 ermöglicht wie der vergrößerte Durchmesser D_{D}.

Die Stutzenverbindung 108 könnte beispielsweise in einer stationären Gasturbine verwendet werden, deren Brenner das erste Bauteil der Stutzenverbindung ist. An den Brenner wird eine Brennstoffleitung angeschlossen, welche als zweites Bauteil entweder den Stutzen 110 mit einer bisher bekannten Axialdichtung 20 oder den bisher bekannten Stutzen 10 mit einer Axialdichtung 120 aufweist. Durch die Verschraubung des Stutzens 10 bzw. 110 mit dem Bauteil 14 kann ein besonders zuverlässige druckdichte Verbindung der beiden Bauteile angegeben werden, um das durch die Brennstoffleitung und den Stutzen in den Brenner einströmende Brennmittel als Fluid zuverlässig und leckagefrei zu führen.

Insgesamt wird mit der Erfindung eine Stutzenverschraubung zum druckdichten Verbinden zweier ein Fluid führender Bauteile angegeben, bei welcher die Lage der Axialdichtung derart vorbestimmt ist, dass ein die Axialdichtung deformierendes Einklemmen zwischen der Oberfläche des Bauteils und dem Stutzen zuverlässig vermieden wird. Erfindungsgemäß wird die Axialdichtung von innen geführt bzw. zentriert. Hierzu schlägt die Erfindung zwei Ausgestaltungen vor, bei denen jeweils zumindest kurz vor Herstellung der druckdichten Verbindung das bisher zu groß dimensionierte Spiel zwischen Gewindefreistich und Innendurchmesser der Axialdichtung reduziert wird. Entweder ist eine am Stutzen im Bereich des Gewindefreistichs angeordnete Rampe und eine daran benachbarte Schulter vorgesehen, oder der Innendurchmesser der Axialdichtung wird, verglichen mit einer aus dem Stand der Technik, aufgrund eines daran angeordneten Innengewindes geringfügig reduziert.

## Patentansprüche

1. Stutzenverschraubung (108) zum druckdichten Verbinden zweier ein Fluid führender Bauteile, umfassend eine an einem der Bauteile (14) vorgesehene Öffnung (26) und einen als zweites Bauteil in die Öffnung (26) einschraubbaren Stutzen (10, 110), die mit ineinander passenden Gewinden (22, 23, 122) versehen sind und zwei, an dem Bauteil (14) und an dem Stutzen (10, 110) angeordnete, sich einander gegenüberliegende Dichtflächen (16, 18, 118) zum Einschluss einer ringförmigen Axialdichtung (20, 120),
wobei die am Stutzen (10, 110) angeordnete Dichtfläche (18, 118) als zum Außengewinde (22, 122) benachbarter Anschlag (31, 131) ausgebildet ist, an welchem gewindeseitig ein Gewindefreistich (24, 124) vorgesehen ist,
**dadurch gekennzeichnet, dass**
ein Mittel im Bereich des Innendurchmessers (D_{I}) der Axialdichtung (20, 120) vorgesehen ist, das die Axialdichtung (20, 120) im Bereich des Gewindefreistichs (124) in einer Betriebslage zentrisch positioniert.

2. Stutzenverschraubung (108) nach Anspruch 1,
bei der das Mittel zur Positionierung der Axialdichtung (20) in der Betriebslage eine am Stutzen (110), im Bereich des Gewindefreistichs (124) anschlagseitig vorgesehene koaxiale Schulter (129) sowie eine Rampe (127) umfasst, die von dem geringeren Durchmesser (D_{G}) des Gewindefreistichs (124) ausgehend zu dem Durchmesser (D_{S}) der Schulter (129) ansteigt.

3. Stutzenverschraubung (108) nach Anspruch 2,
bei der die am Stutzen (110) angeordnete Schulter (129) eine sich in Axialrichtung erstreckende Breite (B) aufweist, die annähernd die Hälfte der Dicke (H) der Axialdichtung (20) entspricht.

4. Stutzenverschraubung (108) nach Anspruch 2 oder 3,
bei der zur Positionierung der Axialdichtung (20) der Durchmesser (D_{S}) der am Stutzen (110) angeordneten Schulter (129) annähernd dem Innendurchmesser (D_{I}) der ringförmigen Axialdichtung (20) entspricht.

5. Stutzenverschraubung (108) nach Anspruch 1,
bei der das Mittel zur Positionierung der Axialdichtung (120) in der Betriebslage ein an dem Innendurchmesser (D_{I}) der Axialdichtung (120) angeordnetes Gewinde (121) umfasst, welches mit dem Stutzen (10) verschraubbar ist.

6. Stutzenverschraubung (108) nach einem der vorangehenden Ansprüche,
bei der die an dem Stutzen (10, 110) ringförmig umlaufende Dichtfläche (118) in Axialrichtung gekrümmt ist.

7. Stutzenverschraubung (108) nach einem der vorangehenden Ansprüche,
bei der die an dem Bauteil (14) angeordnete ringförmige Dichtfläche (116) Teil einer ringförmigen Anspiegelungsfläche (40) ist, die gegenüber der diese umgebenden Bauteiloberfläche (42) zurückspringt und
bei der die ringförmige Anspiegelungsfläche (40) einen Durchmesser (D_{D}) aufweist, der mindestens um den Faktor 1,05 größer ist als der Außendurchmesser (D_{A}) der ringförmigen Axialdichtung (20, 120).

8. Stutzenverschraubung (108) nach einem der Ansprüche 1 bis 7,
bei der die an dem Bauteil (14) angeordnete ringförmige Dichtfläche (16) Teil einer ringförmigen Anspiegelungsfläche (40) ist, die gegenüber der diese umgebenden Bauteiloberfläche (42) zurückspringt und
bei der die ringförmige Anspiegelungsfläche (40) eine Tiefe (T) gegenüber der Bauteiloberfläche (42) aufweist, die geringer ist als die Dicke (H) der Axialdichtung (20).

9. Stutzen (110) für eine druckdichte Stutzenverschraubung (108), umfassend
ein Außengewinde (122) zum Verschrauben des Stutzens (110) in einem Bauteil (14) und
einen zum Außengewinde (122) benachbarten Anschlag (131) als Dichtfläche (118) für eine Axialdichtung (20), wobei zwischen dem Anschlag (131) und dem Außengewinde (122) ein Gewindefreistich (124) vorgesehen ist,
**dadurch gekennzeichnet,**
**dass** der Stutzen (110) im Bereich des Gewindefreistichs (124) anschlagseitig eine koaxiale Schulter (129) sowie eine Rampe (127) umfasst, die von dem geringeren Durchmesser (D_{G}) des Gewindefreistichs (124) ausgehend zu dem Durchmesser (D_{S}) der Schulter (129) ansteigt.

10. Stutzen (110) nach Anspruch 9,
bei der im Querschnitt betrachtet die Rampe (127) sich im Wesentlichen geradlinig erstreckt.

11. Ringförmige Axialdichtung (120) für eine druckdichte Stutzenverschraubung (108) zwischen einem Bauteil (14) und einem Stutzen (10),
**dadurch gekennzeichnet,**
**dass** die ringförmige Axialdichtung (120) an ihrem Innendurchmesser (D_{I}) ein mit dem Stutzen (10) verschraubbares Gewinde (121) aufweist.

12. Verwendung einer Stutzenverschraubung (108) nach einem der Ansprüche 1 bis 8,
mit einem Stutzen (110) nach einem der Ansprüche 9 oder 10 oder
mit einer ringförmigen Axialdichtung (120) nach Anspruch 11,
zum Anschluss einer den Stutzen (10, 110) aufweisenden Brennstoffleitung an einem Brenner einer stationären Gasturbine.
